# EUROPÄISCHE PATENTANMELDUNG

(11) **EP 0 771 608 A1**
(43) Veröffentlichungstag der Anmeldung: **07.05.1997**
(21) Anmeldenummer: 96113440.0
(22) Anmeldetag: 22.08.1996
(51) Int. Cl.: B23P 15/00, F16J 15/08

(54) **Verfahren zur Herstellung einer metallischen Flachdichtung**

(30) Priorität: 31.10.1995 DE 19540533
(71) Anmelder: GOETZE Payen GmbH, D-57562 Herdorf (DE)
(72) Erfinder: Lönne, Klaus, Dipl.-Ing., 51399 Burscheid (DE); Majewski, Klaus-Peter, Dipl.-Ing., 51399 Burscheid (DE); Wagner, Franz-Josef, Ing., 57518 Steineroth (DE)

(57) **Zusammenfassung**

Die Erfindung betrifft ein Verfahren zur Herstellung einer metallischen Flachdichtung, insbesondere Zylinderkopfdichtung (1). Zur Bildung eines axialen Vorsprunges (7), der als Stopper der Sicken (5, 6) fungiert, wird ein in die Brennraumöffnung (2) ragender Abschnitt (9) durch Fließpressen deformiert und nach Bildung des Vorsprunges (7) von der Metallage (8) abgetrennt.

## Beschreibung

Die Erfindung betrifft ein Verfahren zur Herstellung einer metallischen Flachdichtung, insbesondere Zylinderkopfdichtung, mit einer Metallage, die einen am Endbereich einer Durchgangsöffnung, die einer Brennraumöffnung entspricht, durch Fließpressen gebildeten Vorsprung zur Abstützung einer Sicke aufweist.

Metallische Flachdichtungen werden bevorzugt zur Abdichtung bei hohen Beanspruchungen eingesetzt. Der Dichtspalt zwischen Zylinderkopf und Zylinderblock bei Brennkraftmaschinen ist ein bevorzugtes Anwendungsgebiet dieses Dichtungstypes, da dieser durch Innendruck und Temperaturschwankungen ständig oszilliert. Durch Ausbildung von Sicken in einer Metallage erhält die Flachdichtung eine gute Federungseigenschaft. Um im Bereich der Brennraumöffnung höhere Verspannungen zwischen Zylinderkopf und Zylinderblock zu ermöglichen, die für die Sicherstellung der Gasabdichtgüte notwendig ist, wird die Zylinderkopfdichtung im Brennraumöffnungsbereich verdickt ausgebildet. Die Verdickung fungiert gleichzeitig als Stopper für die Sicken, das heißt die Verdickung sorgt dafür, daß die Sicken beim Anziehen der Befestigungsschrauben oder während des Motorbetriebes nicht vollständig plattgedrückt werden.

Zur Herstellung der Verdickung können die Endbereiche der Metallagen umgefalzt oder es können zusätzliche Ringe aufgelegt werden, die dann den Endbereich der Dichtung verdicken.

Aus der DE 42 19 709 ist es darüber hinaus bekannt, durch Fließpressen des Endbereiches einer Metallage eine Materialverdickung zu erzeugen, die als Stopper der Sicken fungiert.

Der Erfindung liegt die Aufgabe zugrunde, ein Verfahren zur Herstellung einer gattungsgemäßen Flachdichtung zu schaffen, die im Hinblick auf die Herstellungskosten günstig ist, wobei gleichzeitig eine verbesserte Funktion angestrebt wird.

Diese Aufgabe wird erfindungsgemäß durch die kennzeichnenden Merkmale des Anspruch 1 gelöst. Vorteilhafte Ausgestaltungen der Erfindungen sind in den Unteransprüchen dokumentiert. Beim Fließpressen wird durch Einprägungen auf der Oberfläche eine Querschnittsverengung in der Metallage erzeugt. Durch das erfindungsgemäße Verfahren liegt diese Querschnittsverengung in dem Endbereich der Metallage, welcher abgetrennt wird, so daß die Flachdichtung im fertigen Zustand keine Metallagen mit störenden Nuten auf der Oberfläche besitzt.

Die Erfindung ist anhand eines Ausführungsbeispieles in der Zeichnung dargestellt und wird im folgenden näher erläutert. Es zeigen:
- Figur 1: Querschnitt einer metallischen Flachdichtung mit unverformter Metallage im Bereich einer Brennraumöffnung
- Figur 2: Prägewerkzeug zur Herstellung des Vorsprunges mit unverformter Metallage, gemäß Figur 1
- Figur 3: geprägte Metallage, gemäß Figur 2, mit Abtrennwerkzeug
- Figur 4: einbaufertige Metalldichtung im Querschnitt, gemäß Figur 1

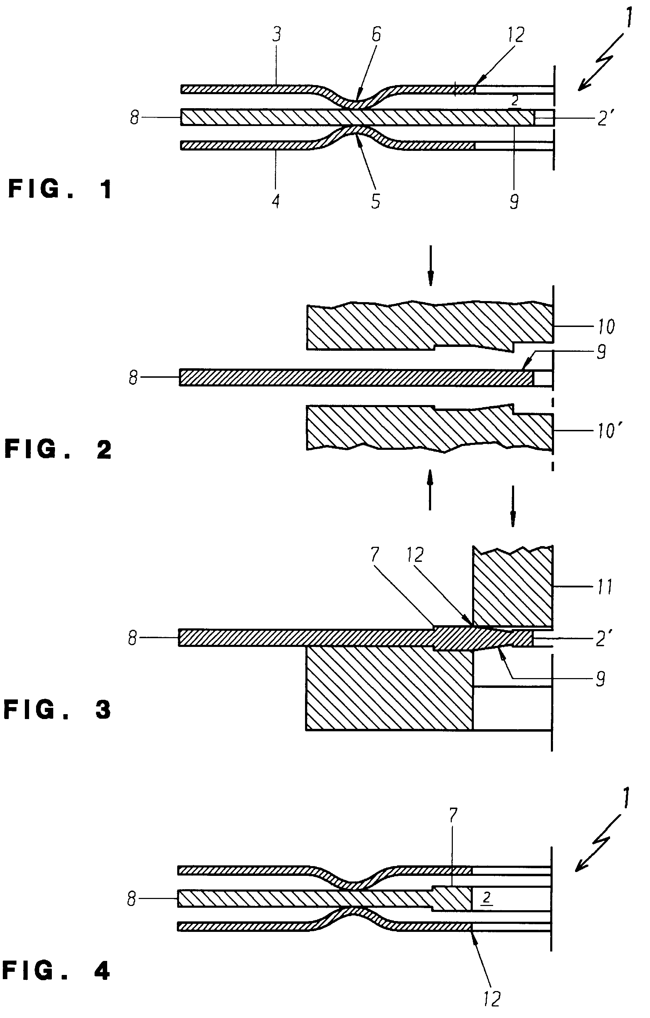

Die Figur 1 zeigt einen Querschnitt durch eine metallische Flachdichtung (1), wie insbesondere Zylinderkopfdichtung für Brennkraftmaschinen, im Bereich einer Durchgangsöffnung, die einer Brennraumöffnung (2) entspricht. In der Figur 1 ist eine noch nicht einbaufertige Zylinderkopfdichtung (1) dargestellt, bestehend aus einer oberen und unteren metallischen Dichtungslage (3, 4) mit Sicken (5, 6). Zur Abstützung der Sicken (5, 6) ist ein Vorsprung (7) (Figur 4) an einer Metallage (8) vorgesehen. Wie aus der Figur 1 ersichtlich, ist der Durchmesser der Durchgangsöffnung (2') der Metallage (8) kleiner als der Durchmesser der Brennraumöffnung (2), so daß ein Abschnitt (9) der Metallage (8) in die Brennraumöffnung (2) ragt.

Aus dem Abschnitt (9) wird durch Fließpressen der Vorsprung (7) herausgeformt, indem ein Prägewerkzeug (10, 10') (Figur 2) mit einer geeigneten Prägeform den Abschnitt (9) verformt. Durch axiales Zusammendrücken der Formhälften des Prägewerkzeuges (10, 10') fließt das Material vom Abschnitt (9), zur Bildung des Vorsprunges (7), in Richtung der Brennraumöffnungskante (12) (Figur 3).

Mit Hilfe eines Abtrennwerkzeuges (11) wird der Abschnitt (9) abgetrennt, so daß sich der Durchmesser der Durchgangsöffnung (2') auf den Durchmesser der Brennraumöffnung (2) vergrößert.

In der Figur 4 ist eine einbaufertige Zylinderkopfdichtung mit einem erfindungsgemäß hergestellten Vorsprung (7) auf der Metallage (8) dargestellt.

## Patentansprüche

1. Verfahren zur Herstellung einer metallischen Flachdichtung, insbesondere Zylinderkopfdichtung, mit einer Metallage, die einen am Endbereich einer Durchgangsöffnung, die einer Brennraumöffnung entspricht, durch Fließpressen gebildeten Vorsprung zur Abstützung einer Sicke aufweist, dadurch gekennzeichnet, daß der Durchmesser der Durchgangsöffnung (2') der Metallage (8) kleiner als der Durchmesser der Brennraumöffnung (2) ausgebildet ist, wodurch ein in die Brennraumöffnung (2) ragender Abschnitt (9) gebildet ist, der mit Hilfe eines Prägewerkzeuges (10, 10') zunächst verformt wird, so daß ein Teil des Abschnittes (9) zur Bildung des Vorsprunges (7) in Richtung der Brennraumöffnungskante (12) fließt und anschließend die Durchgangsöffnung (2') auf den Durchmesser der Brennraumöffnung (2) vergrößert wird, indem der Abschnitt (9) von der Metallage (8) abgetrennt wird.

2. Verfahren nach Anspruch 1, dadurch gekennzeichnet, daß die Metallage (8) aus einem umformfähigen Stahl besteht.

3. Verfahren nach Anspruch 1, dadurch gekennzeichnet, daß die Metallage (8) aus einer Aluminium Knet-Legierung besteht.

4. Verfahren nach mindestens einem der Ansprüche 1 bis 3, dadurch gekennzeichnet, daß nach dem Formgebungsprozeß des Vorsprunges (7) die Metallage (8) gehärtet wird.
